# EUROPEAN PATENT APPLICATION

(11) **EP 3 865 272 A1**
(43) Date of publication of application: **18.08.2021**
(21) Application number: 21157089.0
(22) Date of filing: 15.02.2021
(51) Int. Cl.: B29B 11/16, B29B 15/10

(54) **METHOD FOR PRODUCING A FIRE-RESISTANT AND HEAT-RESISTANT PREIMPREGNATED FIBRE MATERIAL**

(30) Priority: 13.02.2020 BE 202005087
(71) Applicant: Basaltex nv, 8560 Wevelgem (BE)
(72) Inventor: VERBOUWE, Wouter, 9860 OOSTERZELE (BE)
(74) Representative: Chielens, Kristof

(57) **Abstract**

The present invention relates to a method for producing a fire-resistant and heat-resistant preimpregnated fibre material, the method comprising the following steps:
- supplying a substrate made of fibre material;
- impregnating the supplied substrate with one or several thermosetting polymers;
- coating one side of the impregnated substrate with fire-resistant and/or heat-resistant additives in order to form a fire-resistant and/or heat-resistant layer on the one side of the impregnated substrate, wherein the other side of said substrate is an adhesive side.

## Description

The present invention relates, on the one hand, to a method for producing a fire-resistant and heat-resistant preimpregnated fibre material. The present invention relates in particular to a method for producing a fire-resistant and heat-resistant preimpregnated fibre material, a so-called prepreg, which is suitable for use in fibre-reinforced plastics with strong fire-resistant and heat-resistant properties. On the other hand, the present invention relates to a composite made from a preimpregnated fibre material produced in this way.

Preimpregnated fibre materials are semi-finished products which are composed of a substrate, such as for example a fabric made of e.g. carbon fibres or glass fibres, impregnated with one or several thermosetting polymers (resin material), such as for example epoxy resin.

The resultant preimpregnated fibre material may be cut to any desired shape and is used to produce layered composite materials (laminates, fibre-reinforced plastics). To this end, they are placed in a mould in several layers and are subsequently cured in, for example, an oven, with the resin material curing as a result of the heat.

Fibre-reinforced plastics (composites) are used in many technological fields, such as aircraft building, automotive construction, construction of railway vehicles and construction of vessels, due to their ability to withstand high mechanical loads in combination with their low weight. Also, these materials have had to meet high fire safety requirements for a considerable time.

These fire safety requirements translate into stringent standards which a composite has to satisfy. In this case, a distinction is made between requirements relating to the fire resistance and, separately or in combination therewith, requirements regarding the heat-insulating properties when subjected to heat or fire.

These requirements are described, inter alia, for the shipbuilding industry in SOLAS rules and the IMO FTP Code. The requirements for the railway industry are described in EN 45545.

In order to develop composites which meet these requirements, a high concentration of fire-resistant and heat-insulating additives in the composite is necessary.

It is known to add flame retardants to the resin material in order to impart a degree of fire resistance to the composite. These flame retardants are mainly added in solid form and have to be distributed or dispersed in the resin in order to achieve a satisfactory degree of efficiency. In addition, there are also liquid flame retardants which may be added to the resin. However, the liquid flame retardants are specific products which are significantly more expensive than solid flame retardants.

However, the addition of flame retardants to a resin results in an increase in the viscosity of the resin, which renders the production of the composite more difficult, irrespective of the technique which is used to produce this composite. The flow of the resin is slower than that of a resin which is free from flame retardants. In addition, the satisfactory impregnation and wetting of the fibre reinforcement are compromised, which results in reduced properties.

Resin infusion and resin injection are known methods of introducing flame retardants in the resin material. However, application of these methods bears the risk of the flame retardant being filtered out by the fibre reinforcement, resulting in a non-homogenous distribution of flame retardant across the composite. Moreover, this process is also characterized by a relatively low fibre fraction in the composite and a high resin content which, in addition, may also be distributed in a non-homogenous manner. This non-homogenous distribution and high resin content result in non-uniform and unsatisfactory fire properties of the composite. As a result, the addition of flame retardants to the resin by means of resin infusion or injection will be limited and consequently it is not possible to produce a composite having a high fire resistance or heat-insulating properties.

German patent publication DE 102008039866 describes a production process in which a high concentration of fire-resistant and heat-insulating additives is added to the fibre reinforcement beforehand via a coating process prior to the resin infusion. In addition to traditional phosphorus/nitrogen compounds, expandable graphite is also used as an additive. This method results in an increased degree of protection, but the limitations which are inherent to resin infusion remain. In addition, it is not inconceivable for fire-resistant additives to migrate with the flow of the resin during the infusion process, which also leads to a non-uniform distribution of resin and fire-resistant additives. US 2009/0148637 also describes a method in which nano-additives are added to a fibre reinforcement prior to the resin infusion in order to improve the fire-resistant properties of composites.

The addition of fire-resistant phosphorus/nitrogen additives to a fibre reinforcement is also described in DE 602004002673 and US 2004197539, in which, in addition to coating, impregnation of the fibre-reinforced material is also quoted as a way of achieving the required fire resistance. The fabric which has been treated in this way is then processed to form composites by means of resin infusion, as has also been described above. In addition, the absorption of additives via impregnation is limited and the additives are not only on the surface of the composite. As a result thereof, fire resistance is reduced and the efficiency of the added additives is also lower.

With the method for producing a preimpregnated fibre material in which the fabric is impregnated with resin during a step prior to the production of the composite, the so-called prepreg technique, this inhomogeneity of flame retardants does not occur, irrespective of the technique used to perform this resin impregnation. In addition, the amount of resin in the prepreg during production is also readily controllable and possibly significantly lower than with resin infusion or injection which results in improved fire properties. Consequently, the prepreg technique is a highly suitable alternative to resin injection and resin infusion for producing composites with low flammability and high insulation.

Nevertheless, with this process, the addition of flame retardants also has a negative effect on the degree of impregnation of the resin in the fibre reinforcement and a compromise will likewise be necessary here between high fire resistance and strong mechanical properties. A high fire resistance will require a high concentration of flame retardants. As has already been mentioned, this leads to a significant increase in the viscosity of the resin, which inherently results in reduced impregnation and moistening of the fibre reinforcement.

A simple impregnation will also lead to the additives being distributed in the bulk of the composite, resulting in a reduced efficiency of the additives used, as these are not only situated on the surface of the composite. As a result thereof, the expected high requirements with regard to fire resistance and heat resistance will not be satisfied.

In International patent publication WO 2008/058924, this is solved by applying, in a first step, fire-resistant additives before impregnating this fabric with resin in a subsequent step. Consequently, a preimpregnated fibre material is developed which is asymmetrical and has a high concentration of fire-resistant additives which are concentrated on the surface. In this way, a high degree of efficiency is achieved while retaining the positive properties of the prepreg technology with regard to mechanical and fire properties.

However, it is not impossible for fire-resistant additives to be leached out of the fibre reinforcement during the impregnation with resin. As a result thereof, the fire-resistant properties of the preimpregnated fibre material are reduced in a way which is difficult to control.
This loss of fire resistance may be solved by fixing these additives on the fibre reinforcement by means of, inter alia, heat before impregnating the latter with resin. However, this is an additional production step and a less economical solution.

European patent publication EP 1 055 513 proposes a solution in the form of a preimpregnated fibre material consisting of two separate layers. These two layers both contain a thermosetting resin, but with different fire-resistant additives. The layer on the surface is rich in fire-resistant and heat-insulating additives, while the layer provided in the direction of the core of the composite contains a composition which promotes adhesion to the layers situated underneath. In this way, a great efficiency with regard to fire resistance is achieved on the surface and a good adhesion to the rest of the composite, respectively, and it offers a solution for producing composites consisting of several layers from preimpregnated fibre material in accordance with the current requirements.

This solution describes individual layers which are separate from each other, wherein each layer also has an outer and an inner side, and wherein these layers contain different resin and fire-resistant means. However, the production of such a multi-layered structure is a laborious process consisting of several production steps comprising various coating or impregnation steps and associated drying and fixing steps.

The production process which is described involves coating and impregnating a fibre material with a formulation consisting of 10 - 50 % flame retardants. In order to apply different resins or flame retardants, different production steps consisting of coating or impregnation will be performed in succession. In this case, the fire-resistant additives and resins will always have to be fixed in order to prevent additives from leaching out in a subsequent step. Leaching out of additives results in reduced, uncontrollable and fluctuating fire properties of the end product.

The described different resin formulations and amounts on the various layers imply separate manufacturing steps in which each resin layer has to be fixed in order to prevent mixing with adjacent layers.

The deposition of several layers also limits the possibility of manufacturing lightweight composites. With this solution, one layer acts as a fire barrier, an internal layer as a heat shield and, lastly, an inner layer as an adhesive layer.

This solution implies that there are several layers which do not contain flame retardant, or less than the outer layer. However, each layer which is added underneath the outer layer will reduce the fire properties because the overall resin/flame retardant ratio is systemically increased when additional layers are added.

American patent publication US 2012/0107560 describes a method for the targeted deposition of particles smaller than 100 microns onto a substrate, such as a film, tape, adhesive, fibres or a combination thereof, via an electrostatic process in order to reinforce (harden) the substrate in this way. Particles of all kinds can be deposited onto the substrate, such as for example: hardeners, emulsion agents, wetting agents, electrically conductive agents, fillers, flame retardants, flow control agents, photosensitive agents, pressure-sensitive agents, curing agents, catalysts, inorganic substances or a combination thereof. In accordance with US 2012/0107560, such a particle-coated substrate may be provided on a preimpregnated fibre material (prepreg) in order thus to manufacture composites having more robust mechanical properties and strength properties compared to conventional composites which are made using conventional prepregs.

Starting from the prior art, it is the objective to develop a manufacturing process for producing a preimpregnated fibre material having sufficiently high fire-resistant and heat-insulating properties to satisfy the standards currently in force.

The objective of the invention is achieved by providing a method for producing a fire-resistant and heat-resistant preimpregnated fibre material, the method comprising the following successive steps:
1) supplying a substrate made of fibre material;
2) impregnating the supplied substrate with one or several thermosetting polymers; and subsequently;
3) coating one side of the impregnated substrate with fire-resistant and/or heat-resistant additives in order to form a fire-resistant and/or heat-resistant layer on the one side of the impregnated substrate, wherein the other side of said substrate is an adhesive side.

Due to the fact that the fire-resistant and/or heat-resistant layer is applied after the substrate was impregnated with polymers (resin material), the fire-resistant and heat-resistant additives are situated, preferably in a relatively high concentration, on the outer side of the fibre material. Preferably, the fire-resistant and/or heat-resistant layer is a single layer. The fibre material which is manufactured in accordance with the method of the invention preferably comprises 200 g/m² to 1500 g/m² of fire-resistant and/or heat-resistant additives. The other side, in particular the inner side, of the substrate is the adhesive side suitable for bonding to a structure situated underneath, preferably another preimpregnated fibre material or a core material. The fire-resistant and/or heat-resistant layer is preferably applied by coating via blade coating. Blade coating has the advantage that the fire-resistant and/or heat-resistant layer can be applied as a sufficiently thick layer, preferably having a thickness of 700 g/m².

By means of the preimpregnated fibre material produced according to the method of the present invention, it is possible, partly because of the good bonding between the different layers of preimpregnated fibre material to each other, to manufacture composites having a high fire resistance and heat insulation, and it offers a solution for producing composites consisting of several layers of preimpregnated fibre material or sandwich panels made from one or several layers of preimpregnated fibre material and a core material in accordance with the requirements currently in force.

Fire-resistant additives comprise constituents which have a positive effect on the fire resistance of plastics. These include, inter alia, minerals, metal-containing, phosphorus-containing, halogen-containing and nitrogen-containing compounds in both solid and liquid form.

Heat-insulating additives are additives which expand as a result of heat and form an insulating layer on the surface of the composite. These are, inter alia, nitrogen-containing and phosphorus-containing compounds and expandable graphite.

The fire-resistant and/or heat-resistant additives are preferably deposited in liquid form. In accordance with a preferred method of the invention, the fire-resistant and/or heat-resistant layer comprises a thermoplastic binder. The thermoplastic binder is preferably vinyl acetate, styrene acrylate or urethane. A thermoplastic binder will result in a large expansion of the fire-resistant and/or heat-resistant layer in combination with good stability and adhesion of this layer to the substrate. The use of a thermoplastic binder also results in a high heat insulation.

In a first preferred embodiment of the method according to the invention, the fire-resistant and/or heat-resistant additives are applied immediately after impregnation has taken place. Such a method offers the advantage that it can be carried out as a continuous process which is attractive from an economic point of view. Such a method will be referred to as the one-step process in the remainder of this patent description.

Preferably, the thermosetting polymers are partially cured after the fire-resistant and/or heat-resistant additives have been applied and the deposited fire-resistant and/or heat-resistant additives are simultaneously fixed onto the substrate.

This method is preferred because of the following:
- the partial curing and fixing are performed in one and the same step without interrupting the efficient and economical method;
- the process of partial curing and fixing can be balanced out, on the one hand, by the composition of a resin and additive package and, on the other hand, by the settings of the production line, so that both partial curing and fixing are optimal.

The application of a fire-resistant and heat-resistant layer after impregnation of the fibre material may take place before, during or even after the partial curing of the thermosetting resin, as long as it takes place in one step. When it is applied after partial curing, fixing takes place by means of a process which does not have any effect on the further curing of the thermosetting resin.

In an alternative embodiment of the method according to the invention, the thermosetting polymers are partially cured after impregnation has taken place and the impregnated substrate is temporarily stored and the deposited fire-resistant and/or heat-resistant additives are fixed onto the substrate in a subsequent step after they have been applied to said temporarily stored substrate. The temporary storage may be very short, a few hours or days, but may also be several years. The temporary storage preferably involves a freezer. Such a method is referred to as the two-step process in the remainder of this patent description.

In a preferred embodiment of the method, a fire-resistant and/or heat-resistant layer comprising 30% by weight to 80% by weight of fire-resistant and/or heat-resistant additives is deposited. More particularly, 60% by weight of fire-resistant and/or heat-resistant additives are deposited.

In a more preferred method according to the invention, the substrate is a fabric which is made of one or several fibres. Said fibres are preferably carbon fibres, aramid fibres, glass fibres, natural fibres, mineral fibres or basalt fibres.

In an advantageous embodiment of the method according to the invention, the substrate is impregnated by being submerged in an impregnation bath. In an alternative embodiment, the substrate is impregnated via water-based or solvent-based resin impregnation, powder impregnation or hot-melt impregnation.

Said thermosetting polymer is preferably an epoxy, phenol or furan resin.

According to a particular embodiment of the method of the invention, said fire-resistant and/or heat-resistant layer has a weight per unit area of 5 to 3000 g/m². Preferably, said fire-resistant and/or heat-resistant layer has a weight per unit area of 50 to 2000 g/m², more particularly a weight per unit area of 200 to 2000 g/m², most particularly a weight per unit area of 200 to 1500 g/m², preferably a weight per unit area of 200 to 1200 g/m². In practice, the fire-resistant and/or heat-resistant layer has a weight per unit area of 500 to 1200 g/m².

In a more particular embodiment of the method according to the invention, said binder is a water-based binder. Such a water-based binder is preferably applied using a blade, because this can then be applied in a high yield.

In a most particular embodiment of the method according to the invention, the fire-resistant additives comprise minerals, metal-containing, phosphorus-containing, halogen-containing or nitrogen-containing compounds in both solid and liquid form. Preferably, the heat-resistant additives comprise phosphorus-containing and nitrogen-containing compounds, optionally in combination with expandable graphite.

Another subject of the present invention relates to a composite comprising at least one layer of preimpregnated fibre material manufactured according to the method of the invention, wherein the fire-resistant and/or heat-resistant layer is situated on the outer surface of the composite. Such a composite has a sufficient degree of fire-resistant and heat-insulating properties to satisfy the standards currently in force. Preferably, the composite is made in accordance with the invention by means of lamination, vacuum-moulding, autoclave or compression-moulding.

The composite according to the invention comprises at least one top layer made of preimpregnated fibre material manufactured according to the method of the invention, and a layer situated underneath, wherein the layer situated underneath is made of a non-preimpregnated material, a preimpregnated fibre material and/or a core material.

The invention will now be explained in more detail by means of the following detailed description of a preferred embodiment of the method for manufacturing a fire-resistant and heat-resistant preimpregnated fibre material according to this invention. The sole aim of this description is to give illustrative examples and to indicate further advantages and particulars, and can therefore by no means be interpreted as a limitation of the area of application of the invention or of the patent rights defined in the claims.

Reference numerals are used in this detailed description to refer to the attached drawings, in which:

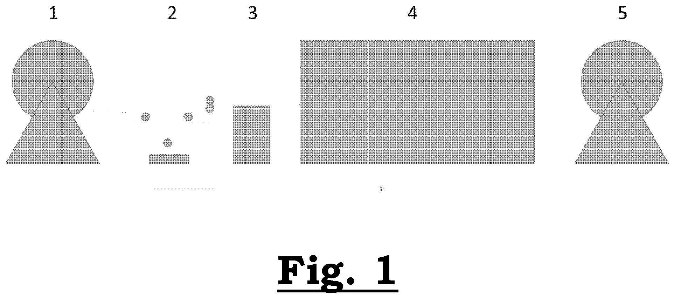

- ***Fig. 1******:** shows a diagrammatic representation of the manufacturing process of the invention according to the one-step process.*

The present invention relates to a method for producing a fire-resistant and heat-resistant preimpregnated fibre material, wherein use is made of a preimpregnated fibre material (prepreg) wherein the fire-resistant and heat-insulating additives are applied after the fibre reinforcement has been impregnated with resin.

The method according to the present invention comprises the following steps:
- supplying a substrate made of fibre material;
- impregnating the supplied substrate with one or several thermosetting polymers;
- applying fire-resistant and/or heat-resistant additives to one side of the impregnated substrate to form a fire-resistant and/or heat-resistant layer on the one side of the impregnated substrate, wherein the other side of said substrate is an adhesive side.

The uniqueness of the method according to the invention lies in the fact that the fire-resistant and/or heat-resistant layer is applied after impregnation of the substrate with the one or several thermosetting polymers, preferably before the partial curing of the respective thermosetting polymers.

Fig. 1 shows a diagrammatic representation of a possible embodiment of the method according to the invention, in particular the one-step process in which the fire-resistant and/or heat-resistant additives are applied immediately after the impregnation. With the one-step process, the substrate made of fibre material is supplied via a supply system (1) and is submerged in an impregnation bath (2) in which the substrate is impregnated with one or several thermosetting polymers. Immediately after leaving the impregnation bath (2) and passing through a double roller press (foulard), the fire-resistant and/or heat-resistant additives are applied via coating (3), such as for example blade coating. After the coating layer has been applied, the unit is passed through an oven (4). In the oven, the deposited additives are partially cured and the deposited fire-resistant and/or heat-resistant additives are fixed onto the substrate. The residence time in the oven and the temperature of the oven are determined in such a way that, on the one hand, not too much partial curing takes place and the thermosetting resin is cured to a sufficient degree and, on the other hand, the fire-resistant and heat-resistant layer is fixed to a sufficient degree. In order to find a good balance between partial curing and fixation, the reactivity of the thermosetting resin and the formulation of the fire-resistant and heat-resistant layer will be tailored to each other.

After leaving the oven (4), the preimpregnated fibre material is rolled up by means of a winding unit (5). The resultant fibre material has a high concentration of fire-resistant and heat-resistant additives on one side and has a high concentration of resin ensuring good adhesion to the layers situated underneath on the other side.

By using the method according to the invention, leaching out of additives is prevented, since no subsequent resin impregnation takes place after the additives have been deposited and the additives are thus concentrated on the surface of the prepreg.

The use of one single layer of fibre reinforcement is inherent to this method and gives the opportunity of producing lightweight composites which satisfy the fire safety requirements in force. With this method, the resin/flame retardant can also be minimized in order to achieve the highest possible fire resistance and heat resistance. In a typical example, the preimpregnated fibre material has a resin/additives ratio of approximately 1 to 2.

In this method, the additives are applied by coating after the fibre reinforcement has been impregnated with resin, before, during or after the resin is or has been partially cured by, for example, heat. If the additives are applied before or during this B stage, the process of partially curing the resin (B stage of the prepreg) will also fix the additives onto the carrier at the same time. With this method, the B stage of the prepreg and the fixation of the additives have to be balanced in order to achieve both an optimum B stage and fixation of the additives. If the additives are applied after the B stage, these will only be fixed by means of a process which does not involve any further curing of the prepreg.
This production sequence is not limited to the technique which is used for resin impregnation and is usable for customary techniques such as water-based or solvent-based resin impregnation, powder impregnation or hot-melt impregnation.

Typical resins which may be used are thermosetting resins.

Mineral, natural and synthetic fibres or a combination of these may be used for the fibre reinforcement. Typical fibres which are used for reinforcing composites are carbon, aramid, glass, natural, mineral or basalt fibres.
The fibre reinforcement itself takes the form of an impregnable layer, inter alia in the form of a tape, fabric, multi-layered fabric or mat, consisting of one or several types of fibres.

The prepreg obtained in this way is used further for producing composite materials by means of current methods, such as lamination, vacuum-moulding, autoclave or compression-moulding. In this case, the side of the prepreg with the fire-resistant and heat-resistant additives is turned towards the outside of the composite and the other side without additives is turned towards the inside of the composite. The latter side is able to adhere to other prepreg layers, optionally by the use of additives, or by means of a core material. This resin-rich side will bring about good adhesion to the layers situated underneath and good mechanical properties of the composite.

The following example relates to a comparative study of the fire resistance between two composites A and B, in which composite A does not have a fire-resistant layer and composite B comprises the fire-resistant and heat-resistant preimpregnated fibre material manufactured according to the invention.

### Example:

Composite A is a sandwich composite manufactured by compression-moulding a polyester foam core material (Airex T90.60 - 2 cm) comprising two layers of a furan resin-impregnated basalt fabric without heat-insulating layer of 810 g/m² on both sides.
basalt/furan / basalt/furan / Airex T90.60 / basalt/furan / basalt/furan

Composite B is a sandwich composite manufactured by compression-moulding a polyester foam core material (Airex T90.60 - 2 cm) comprising, on one side, two layers of a furan resin-impregnated basalt fabric without heat-insulating layer of 810 g/m² and, on the opposite side, one layer of a furan resin-impregnated basalt fabric without heat-insulating layer of 810 g/m² in contact with the polyester core, and one adjoining layer of a furan resin-impregnated basalt fabric of 810 g/m² with a heat-insulating layer of 667 g/m², in which the heat-insulating layer was applied by means of blade coating immediately after impregnation of the basalt fabric.
basalt/furan / basalt/furan / Airex T90.60 / basalt/furan / basalt/furan/heat-resistant layer

Composites A and B were tested by means of 'cone calorimeter' ISO 5660-1 at 50 kW/m² according to the criteria of EN 45545-2 for the construction of railway vehicles, with the heat-insulating layer in composite B facing the source of heat.

| ISO 5660-1 (50 kW/m²) | MAHRE (kW/m²) | Total Heat Release (MJ/m²) |
|---|---|---|
| Composite A | 94 | 29.4 |
| Composite B | 33 | 18.7 |

On the basis of the above results, it can be stated that the fire-resistant and heat-resistant layer in Composite B inhibits ignition of the polyester core material, resulting in a lower generation of heat during the test, expressed in the MAHRE value and 'Total Heat Release'.

## Claims

1. Method for producing a fire-resistant and heat-resistant preimpregnated fibre material, **characterized in that** the method comprises the following successive steps:
1) supplying a substrate made of fibre material;
2) impregnating the supplied substrate with one or several thermosetting polymers; and subsequently;
3) coating one side of the impregnated substrate with fire-resistant and/or heat-resistant additives in order to form a fire-resistant and/or heat-resistant layer on the one side of the impregnated substrate, wherein the other side of said substrate is an adhesive side.

2. Method according to Claim 1, **characterized in that** the fire-resistant and/or heat-resistant layer comprises a thermoplastic binder.

3. Method according to Claim 1 or 2, **characterized in that** the fire-resistant and/or heat-resistant additives are applied immediately after the impregnation, and **in that**, after the fire-resistant and/or heat-resistant additives have been applied, the thermosetting polymers are partially cured and the deposited fire-resistant and/or heat-resistant additives are fixed onto the substrate.

4. Method according to one of the preceding claims, **characterized in that** a fire-resistant and/or heat-resistant layer comprising 30% by weight to 80% by weight of fire-resistant and/or heat-resistant additives is deposited.

5. Method according to one of the preceding claims, **characterized in that** the substrate is a fabric which is manufactured from one or several fibres, wherein said fibres are carbon fibres, aramid fibres, glass fibres, natural fibres, mineral fibres or basalt fibres.

6. Method according to one of the preceding claims, **characterized in that** said fire-resistant and/or heat-resistant layer has a weight per unit area of 5 to 3000 g/m².

7. Method according to one of Claims 2 to 6, **characterized in that** said binder is a water-based binder.

8. Method according to one of the preceding claims, **characterized in that** the fire-resistant additives comprise minerals, metal-containing, phosphorus-containing, halogen-containing or nitrogen-containing compounds in both solid and liquid form.

9. Method according to one of the preceding claims, **characterized in that** the heat-resistant additives comprise phosphorus-containing and nitrogen-containing compounds, optionally in combination with expandable graphite.

10. Method according to one of the preceding claims, **characterized in that** the substrate is impregnated by being submerged in an impregnation bath.

11. Method according to one of the Claims 1 to 9, **characterized in that** the substrate is impregnated by means of a water-based or solvent-based resin impregnation, powder impregnation or hot-melt impregnation.

12. Composite comprising at least one layer of preimpregnated fibre material manufactured according to one of Claims 1 to 11, wherein the fire-resistant and/or heat-resistant layer is situated on the outer surface of the composite.

13. Composite according to Claim 12, **characterized in that** said composite comprises at least a top layer made of preimpregnated fibre material manufactured according to one of Claims 1 to 11, and a layer situated underneath, wherein the layer situated underneath is made of a non-preimpregnated material, a preimpregnated fibre material and/or a core material.

14. Composite according to Claim 12 or 13, **characterized in that** said composite is manufactured by means of lamination, vacuum-moulding, autoclave or compressi on-moulding.
